Europäisches Patentamt

European Patent Office

Office européen des brevets

(11) Publication number: **0 518 547 A1**

## EUROPEAN PATENT APPLICATION

(21) Application number: 92305072.8

(22) Date of filing: 03.06.92

(51) Int. Cl.5: **B64F 1/22**

(30) Priority: 08.06.91 GB 9112358

(43) Date of publication of application:
16.12.92 Bulletin 92/51

(84) Designated Contracting States:
DE ES FR GB IT NL SE

(71) Applicant: BRITISH AEROSPACE PUBLIC
LIMITED COMPANY
Warwick House, P.O. Box 87, Farnborough
Aerospace Centre
Farnborough, Hants. GU14 6YU(GB)

(72) Inventor: Talbot, Roland Graham
British Aerospace Reg. Aircraft Ltd., Comet
Way
Hatfield, Hertfordshire AL10 9TL(GB)
Inventor: Cullum, David
British Aerospace Reg. Aircraft Ltd., Comet
Way
Hatfield, Hertfordshire AL10 9TL(GB)

(54) A towbar for an aircraft and overload protection device therefor.

(57) An overload protection device (3) for an aircraft towbar (1) is provided. The device (3) has first and second interengageable elements (4,5) and a member (6) connecting them together to transmit at least compressive and tensile loads along the towbar (1) between a tractor connectable to one end and an aircraft nosewheel assembly connectable to the other end. The device (3) includes guide means (16,17,18,19) to direct the elements laterally with respect to each other and out and mutual engagement when at least a compressive load in excess of a predetermined threshold value is applied between the ends of the towbar (1). The towbar is thus directed laterally to one side of the nosewheel assembly to avoid impact between the towbar and nosewheel assembly causing damage thereto.

Fig.2

This invention relates to towbars for aircraft and overload protection devices for such towbars.

In order to avoid excess loading being transferred from a towbar to an aircraft during manoeuvring of the aircraft by ground handling equipment it is known to provide an overload protection device. In such a device an end portion of the towbar which is attachable to a nose wheel assembly of the aircraft comprises two elements which are capable of telescopic movement with respect to one another and which are connected together by a shearable element such as a shear pin which is designed to fail upon the application of a compressive or tensile load to the towbar in excess of a predetermined value.

Such devices suffer from the limitation that if the driver of a tractor pushing the aircraft does not immediately feel or hear the shear pin giving way the two elements will merely be further compressed together telescopically until other parts of the towbar connect with each other and transmission of the excess load to the nose wheel assembly will resume. Extensive damage can result.

It is an object of the invention to provide an improved overload protection device for an aircraft towbar.

According to a first aspect of the present invention there is provided an overload protection device for an aircraft towbar comprising first and second interengageable elements and a member connecting them together to transmit at least compressive and tensile loads along the towbar between a tractor connectable to one end and an aircraft nose wheel assembly connectable to the other end thereof the device including guide means to direct the elements laterally with respect to each other and out of mutual engagement upon at least a compressive load in excess of a predetermined threshold value being applied between the ends of the towbar.

According to a second aspect of the invention there is provided a towbar for an aircraft incorporating an overload protection device according to the first aspect of the invention.

The member connecting together the first and second elements of the device may be designed to transmit generally horizontal bending loads in addition to the compressive and tensile loads and accordingly may be designed to fail upon such a generally horizontal bending load in excess of the said threshold value being applied between the ends of the towbar.

The transmission of excessive steering loads to the nosewheel assembly of the aircraft is thus avoided.

The member may be a shear pin having its longitudinal axis extending generally vertically, in use.

The two elements may be retained in alignment, prior to failure of the member, by stop means radially spaced from the shear pin. Such stop means may comprise at least one cam track on one of the elements engaged with at least one cam follower on the other of the elements.

The at least one cam track desirably comprises at least one channel and the at least one cam follower may comprise a spigot extending into the or each channel. Positive location of the two elements with respect to one another during the overload protection operation is thus provided.

In order to avoid offset loadings the device may be symmetrical about a central longitudinal axis and the at least one cam follower may comprise a pair of oppositely extending coaxial spigots and the at least one channel may comprise a pair of channels of mirror image form, and in mirror image relationship, to each other.

Preferably the at least one cam track has at least a proportion of its length extending across one of the elements obliquely to a longitudinal axis of the towbar, in use, so as to direct the elements laterally with respect to each other and out of mutual engagement as aforesaid.

The at least one channel may be parallel sided for part of its length having a widened mouth to the obliquely extending proportion of its length at an open end thereof. Such a widened mouth may ease the exit of the cam follower from the channel in the event of combined compressive and bending loads being applied to the towbar.

The at least one cam track may have a proportion of its length extending substantially parallel with the longitudinal axis of the towbar, in use.

The device may be a clevis arrangement in which one of the elements is a bifurcated member and the other element extends between forks of the bifurcated member. In this way offset loadings are avoided.

Each fork of the bifurcated member may carry an internally extending spigot and opposed faces of the other element may each have a said channel formed therein.

A root portion of the bifurcated member, enclosed between the forks thereof, may comprise a further cam track extending obliquely to the longitudinal axis of the towbar, when in use, and the further cam track may be generally parallel to at least a proportion of the at least one cam track, the further cam track being engageable with an end portion of the said other element.

A clearance may exist between the further cam track and the end portion of the other element, in use, the size of which, measured longitudinally of the towbar, may be generally equal to the length of cam track having its axis extending longitudinally of the towbar. Engagement of the at least one cam track and the further cam track during overload protection operation may thus be substantially simultaneous to encourage load distribution.

The invention will now be described by way of example with reference to the accompanying drawings of which:-

Figure 1 is a side elevation of an aircraft towbar incorporating an overload protection device according to the invention,

Figure 2 is a plan view of first and second elements of the device, shown separated, and

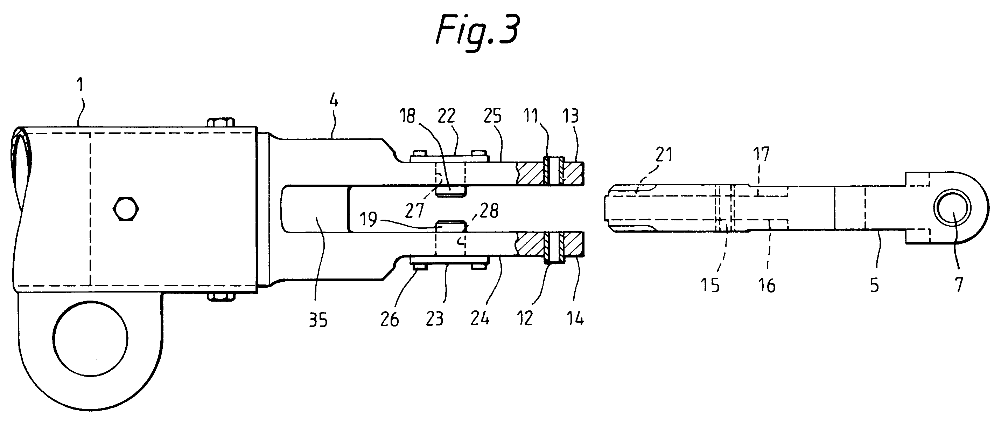

Figure 3 is a side elevation of the elements of Figure 2 with one element fitted to a towbar.

Referring to the drawings, a towbar 1 has a towing eye 2 attachable to a tractor unit and at the other end an overload protection device 3 attachable to a nosewheel assembly of an aircraft (not shown).

The device 3 comprises a first element in the form of a bifurcated member 4, a second element in the form of a plate 5 and a connecting member in the form of a shear pin 6 to connect the bifurcated member 4 and the plate 5 together.

The plate 5 has a pair of eyes 7,8 for connection via a pin to an attachment on the aircraft nosewheel assembly and to transmit compressive, tensile and bending (steering) loads between the towbar and nosewheel assembly during manoeuvring. The bifurcated member 4 has a cylindrical connection portion 9 for a bolted connection to a cylindrical portion 10 of the towbar 1.

In use during manoeuvring the bifurcated member 4 and the plate 5 are connected together by the shear pin 6 passing through bushes 11,12 in each fork 13,14 and through a bush 15 in the plate 5. The bushes 11,12 and 15 are of hardened material to ensure a clean fracture of the shear pin and to prevent sheared portions of the pin becoming jammed in the device.

Alignment of the bifurcated member and the plate is achieved by engagement of cam tracks in the form of channels 16,17 cut into opposed surfaces of the plate 5 with spigots 18,19 extending inwardly from each fork 13,14 of the bifurcated member. the channels 16, 17 are mirror images of each other and in mirror image relationship. Each spigot 18,19 is attached to a backing plate 22,23 positioned against an outer surface 24,25 of each fork 13,14 and bolted thereto by bolts 26. Each spigot 18,19 passes through an aperture 27,28 in the fork 13,14.

During manoeuvring the spigots 18,19 engage straight portions 20,21 of each channel 16,17. The radial spacing of each spigot 18,19 from the shear pin 6 ensures that the two elements of the device 3 are retained in alignment during manoeuvring.

Each channel 16,17 has a portion 29 extending at an oblique angle to the longitudinal axis of the towbar 1. Each portion 29 has an enlarged mouth 31.

The plate 5 has a rounded end portion 33 which is adapted to engage, during overload protection operation, either one of a pair of further cam tracks 34,35 forming a root to the forks 13,14 of the bifurcated member 4. Each further cam track 34,35 forms an angle with the longitudinal axis of the towbar 1 similar to that formed by one face 36 of each obliquely angled portion 29 of the channels 16,17.

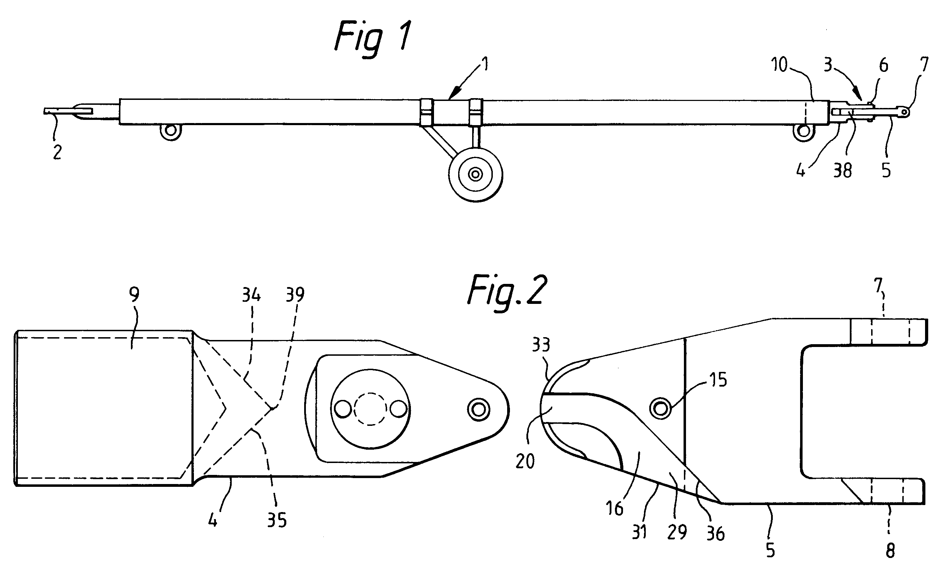

The length of each straight portion 20,21 of its channel is generally equal to a clearance 38 (See Fig.1) between the rounded end portion 33 of the plate and an apex 39 formed between each cam track 34,35.

In use, and prior to failure of the shear pin, all compressive, tensile and bending loads applied to the towbar 1 by the tractor unit will be transmitted through the shear pin, loads being applied to the shear pin being a function of the distance longitudinally of the towbar between each spigot and the shear pin.

Upon failure of the shear pin due to excessive tensile loading during pulling of the aircraft the plate 5 will be withdrawn from the forks 13,14 longitudinally of the towbar and each spigot 18,19 will be withdrawn from the straight portion 20,21 of its channel and separation of the two elements of the device will be achieved without resistance.

If an excessive compressive load is applied through the towbar to the device during pushing the aircraft the shear pin will again fail and the plate 5 will be moved longitudinally of the towbar further between the forks 13,14. Initially, the spigots 18,19 will pass along the straight portions 20,21 of the channels. When each spigot 18,19 reaches the start of the obliquely angled portion 29 of its channel the plate and bifurcated member 4 will be moved laterally with respect to each other and disengagement will occur upon each spigot passing out of the enlarged mouth 31 of its channel. Thereafter, if the towbar is still moving longitudinally with respect to the nosewheel assembly the two elements of the device 3 will simply pass alongside one another and no further forces will be transmissible between the towbar and the nosewheel assembly.

If while steering the aircraft an excessive bending load is applied to the towbar by the tractor unit the shear pin will fail, the bifurcated member 4 will pivot about each spigot 18,19 initially and further relative movement between the two elements will tend to withdraw the spigots 18,19 from the open ends of the straight portions 20,21 of the channels.

Thus it will be seen that excessive loadings in any of compressive, tensile or bending modes applied to the towbar will result in the two elements of the device becoming disengaged from one another and will avoid the transfer of any excessive forces between towbar and aircraft nosewheel assembly.

## Claims

1. An overload protection device (3) for an aircraft towbar (1) comprising first and second interengageable elements (4,5) and a member (6) connecting them together to transmit at least compressive and tensile loads along the towbar between a tractor connectable to one end and an aircraft nose wheel assembly connectable to the other end thereof, the device (3) being characterised by including guide means, (16,17,18,19) to direct the elements laterally with respect to each other and out of mutual engagement upon at least a compressive load in excess of a predetermined threshold value being applied between the ends of the towbar.

2. A device as in claim 1 wherein the member (6) connecting together the first and second elements (4,5) thereof is also designed to fail upon the application of a generally horizontal bending load in excess of the threshold value applied between the ends of the towbar (1).

3. A device as in claim 2 wherein the member is a shear pin (6) having its longitudinal axis extending generally vertically, in use.

4. A device as in claim 3 wherein the two elements (4,5) are retained in alignment, prior to failure of the member (6), by stop means (16,17,18,19) included in the said guide means and radially spaced from the shear pin.

5. A device as in any preceding claim wherein the guide means comprise at least one cam track (16,17) on one of the elements (5) engaged with at least one cam follower (18, 19) on the other of the elements (4).

6. A device as in claim 5 wherein the at least one cam track (16,17) has at least a proportion of its length (29) extending across one of the elements (5) obliquely to a longitudinal axis of the towbar, in use.

7. A device as in claim 5 or 6 wherein the at least one cam track (16,17) has a proportion of its length (20) extending substantially parallel with the longitudinal axis of the towbar, in use.

8. A device as in claim 7, when dependant upon claim 6, wherein the at least one cam track comprises at least one channel parallel sided for part of its length having a widened mouth (31) to an open end of the obliquely extending portion (29) of its length.

9. A device as in any of claims 5 to 8 wherein the at least one cam follower comprises a pair of oppositely extending coaxial spigots (18,19) and the at least one cam track comprises a pair of channels (16, 17) of mirror image form, and in mirror image relationship, to each other.

10. A device as in any preceding claim comprising a clevis arrangement wherein one of the elements is a bifurcated member (4) and the other element (5) extends between forks (13,14) thereof.

11. A device as in claim 10, when dependant upon claim 9, wherein each fork (13,14) of the bifurcated member (4) carries an internally extending spigot (18,19) and opposed faces of the other element (5) each have a said channel (16,17) formed therein.

12. A device as in claim 10 or 11 wherein a root portion of the bifurcated member (4), between the forks thereof (13,14), comprises a further cam track (34,35) extending obliquely to the longitudinal axis of the towbar (1), when in use, generally parallel to at least a proportion (29) of the at least one cam track (16,17), the further cam track (34,35) being engageable with an end portion (33) of the said other element (5).

13. A towbar for an aircraft including an overload protection device (3) according to any of the preceding claims.

Fig 1

Fig.2

Fig.3

EP 0 518 547 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-2 161 786 (MESSIER-HISPANO)<br>* page 5, line 20 - line 24 *<br>--- | 1,2,3 | B64F1/22 |
| A | DE-A-3 642 044 (FRUTTIGER)<br>* column 2, line 29 - column 3, line 21 *<br><br>----- | 1 | |

TECHNICAL FIELDS SEARCHED (Int. Cl.5 )

B64F

The present search report has been drawn up for all claims

| Place of search | Date of completion of the search | Examiner |
|---|---|---|
| THE HAGUE | 08 SEPTEMBER 1992 | HAUGLUSTAINE H. |

EPO FORM 1503 03.82 (P0401)